# EUROPEAN PATENT SPECIFICATION

(11) **EP 4 102 774 B1**
(45) Date of publication and mention of the grant of the patent: **17.09.2025**
(21) Application number: 21179089.4
(22) Date of filing: 11.06.2021
(51) Int. Cl.: H04L 41/0806, H04L 41/08, H04W 12/12, H04W 12/42, H04L 12/28, H04W 8/18, H04W 8/20, H04W 12/30, H04W 60/00

(54) **TECHNIQUES FOR PROVISIONING OF A FIXED LINE USER DEVICE**
VERFAHREN ZUR BEREITSTELLUNG EINER FESTNETZBENUTZERVORRICHTUNG
TECHNIQUES DE FOURNITURE D'UN DISPOSITIF UTILISATEUR À LIGNE FIXE

(43) Date of publication of application: 14.12.2022
(73) Proprietor: Deutsche Telekom AG, 53113 Bonn (DE); Technische Universität Darmstadt, 64289 Darmstadt (DE)
(72) Inventor: Römer, Stefanus, 55773 Hennef (DE); Haag, Thomas, 63110 Rodgau (DE); Kundel, Ralf, 64289 Darmstadt (DE); Nobach, Leonhard, 55120 Mainz (DE)
(74) Representative: Braun-Dullaeus Pannen Emmerling Patent- & Rechtsanwaltspartnerschaft mbB

(56) References cited:
- EP-A1- 3 276 996
- EP-A1- 3 277 003
- WO-A1-2020/096814
- WO-A1-2020/178055
- US-B1- 10 708 766
- BENETTI ELISA ET AL: "Centralized management of multiple WiFi connectivity services (part II)", 2015 23RD INTERNATIONAL CONFERENCE ON SOFTWARE, TELECOMMUNICATIONS AND COMPUTER NETWORKS (SOFTCOM), UNIVERSITY OF SPLIT, FESB, 16 September 2015 (2015-09-16), pages 325 - 329, XP032803711, [retrieved on 20151030], DOI: 10.1109/SOFTCOM.2015.7314078

## Description

The invention relates to a method, a user device, a data-path switcher and to communication system that enable provisioning of a fixed line user device, in particular provisioning of the fixed line user device within a 5G communication network.

The 5G communication standard promises a significant improvement for its users in terms of stability, the provision of network frame conditions tailored to the customer, reduced latency, etc. In order to make the best possible use of the 5G communication standard, efforts are being made to operate both mobile communication and communication via wired lines together within the 5G standard.

Since the 5G communications standard has its origins in mobile communications and its core network is designed accordingly, the obvious effort is to adapt wireline communications with regard to the already existing mobile infrastructure. Hence, in the following some concepts of 5G communication will be described in the context of how it is currently done in the 5G cellular environment.

The approaches to "unify" the wired and the mobile world is often called fixed mobile convergence (FMC), where a 5G core network also controls the usage of fixed access lines such as DSL or optical fiber or cable in a way that user authentication, session management and the user data transfer is done by the 5G core network according to 3GPP standards.

Existing standards for FMC are: BBF TR-456, BBF TR-470 and 3GPP TS 23.316.

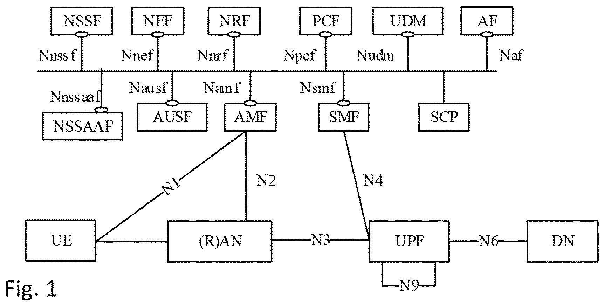

A generic 5G core network is shown in Fig. 1.

Typically, (in mobile networks) a UE (user equipment) is a smartphone and the (R)AN is a radio access network. In FMC (the 3 standards above) the UE is replaced by a 5G-RG or a FN-RG and the (R)AN by an Access Gateway Function (AGF) as shown in the Figure 1 "5G core in FMC" slide.

Differentiation between 5G-RG and FN-RG: FN-RG: A common residential gateway without 5G functionality. The SIM based authentication is done completely by/within the AGF. On the downside, this method is very complex. To enable 5G functionality for legacy devices, AGF-Modules are typically located at the interface between wired access and the 5G core network.

5G-RG: The 5G-RG contains a SIM and can authenticate itself directly towards the AMF and "speaks" the 5G protocols and mechanisms.

Current solutions in BBF and 3GPP propose an additional usage of a so-called Access Gateway Function (AGF), which performs protocol encapsulation and/or decapsulation and adaptions between the Fixed Line Access Domain and the 5G core network. Currently the solution is to insert a physical SIM into a "wired" 5G-RG (5G Residential Gateway). The physical SIM already provides the information of a user's communication profile according to a contract with a network provider. The SIM could be sent to the user via postage service however, this is a tedious manual process, and it is desirable to replace it by automatic solutions, like the eSIM solution that is already used in the context of cellular radio access networks in the framework of 5G.

Electronic subscriber identification modules (eSIMs) are implemented in mobile communication devices - often called user equipment - as hard-wired hardware circuits.

For communication via a communication network, each eSIM requires a communication profile (eSIM profile) that is assigned to an operator of the communication network. The communication profile determines the communication capability, such as a data volume for the mobile communication device equipped with an eSIM in a communication network of a mobile radio network operator.

The electronic communication profile is usually called up by a mobile communication device, for example a smartphone, from a profile server, for example from an SMDP profile server, and activated for the electronic subscriber identification module. This step is necessary because it is not clear from the start when the eSIM is implemented into the user equipment, how the contract between the user with a network provider looks like in terms of data throughput and other technical requirements.

The assignment of the electronic communication profile to a user of the mobile communication device usually takes place through a contract between a network operator and a user, which is decoupled from manufacturing the device. In principle, the user can have different communication devices with different performance characteristics.

But how to activate a user equipment via a cellular network if it is not allowed to use this cellular network before downloading the communication profile to its eSIM by this cellular network.

Currently, three approaches exist for mobile user equipment like smart phones and loT devices for provisioning an eSIM.
i) a bootstrap eSIM is initially implemented inside the user equipment. By means of this bootstrap eSIM the user equipment can connect to a radio network, which offers only an eSIM provisioning a server functionality for a download process of the actual communication profile according to a contract between the network provider and the user;
ii) a hybrid user equipment (sim and eSIM) can download the eSIM profile over a data connection provided by the "normal" SIM.
iii) downloading the eSIM over a Wi-Fi connection.

A prerequisite for all these options is the availability of a radio access network, for instance a WLAN or a Wi-Fi or any kind of near field communication. Since the 5G-RG is the device that typically provides that WLAN and due to the fact that in 5G-RG typically is not capable to communicate directly with a cellular network, the three options above do not work for a fixed line 5G-RGs.

WO 2020/055309 A1 teaches a registration process of a legacy fixed network residential Gateway to the 5G core network as follows: A 5G Fixed Mobile Interworking Function Database entity, FMIF-DB, in a system comprising a Wireline 5G Access Network (W-5GAN) connecting to a Fixed Network Residential Gateway (FN-RG), the W-5GAN comprising a Wireline Access Node (AN), and a 5G Fixed Mobile Interworking Function (FMIF), the FMIF connecting to Access and Mobility Management Function (AMF) and to an User Plane Function (UPF) and the FMIF DN. The wireline Access Node, coupling to a Fixed Network Residential Gateway (FN-RG) providing services such as TV, Internet and voice, the database apparatus being adapted for holding - User entity, UE, credentials for providing an identity of an FN-RG as a User Entity, UE, and - UE configuration data for the FN-RG.

For 5G-RG a problem arises because in the 5G IP-based communication connection to any data network is not possible without authentication. However, this is needed for provisioning the eSIM.

In the view of above, it is an object of the present invention to provide an efficient method for provisioning a fixed line user device, in particular a 5G-RG, in a 5G communication network.

US 10,708,766 B1 teaches method that includes receiving identification information associated with a user device and determining whether the user device is associated with a new order or an upgrade order associated with a wireless service provider. The method may also include activating an order in response to determining that the user device is associated with an upgrade order and identifying address information of a network device associated with obtaining a subscriber identity module (SIM) profile for the user device.

Document BENETTI ELISA ET AL: "Centralized management of multiple WiFi connectivity services (part II)",2015 23RD INTERNATIONAL CONFERENCE ON SOFTWARE, TELECOMMUNICATIONS AND COMPUTER NETWORKS (SOFTCOM), UNIVERSITY OF SPLIT, FESB, 16 September 2015 (2015-09-16), pages 325-329, XP032803711,DOI: 10.1109/SOFTCOM.2015.7314078 discloses a method for providing connectivity services wherein users are profiled with dedicated filtering configurations.

This object is solved by the features of the independent claims.

The invention is defined in the independent claims as appended. advantageous features are set out in the dependent claims.

Common approaches of provisioning eSIM in IP-network require two different paths of IP - based network connectivity.

A first path that will be called "normal operational data-path", or in short normal data-path. This is the data-path that is assigned to the user equipment in the communication profile to fulfill the technical requirements according to the contract between the network provider and the user. In terms of 5G mobile communication, this basically means the slices that are fulfilling the technical requirements according to the contract. The normal data-path shall be established by the eSIM and it is not working as long as the eSIM is not being provisioned.

The second path that will be called a "login data-path" or a "provisioning data-path". This represents a data-path that is already working without 5G based authentication. So it can be used to connect to the eSIM provisioning network and to have access to modules, devises, servers etc. of network provider to facilitate the provisioning process only.

According to a first aspect of the invention, a method for provisioning a communication profile of a 5G-RG user device according to independent claim 1 is provided.

The method is based on the following steps:
- Starting a Login-Mode by the user device, wherein the user device signals a provisioning request in the Login-Mode over a fixed line data-path provided by the network provider, wherein the provisioning request comprises an identification related to the communication profile of the user;
   ∘ practically, the fixed line user device can detect if it has already been provisioned or not. For example, if the appropriate data of the communication profile is missing within its eSIM module, then the user device can activate its Login-mode that triggers a provisioning request to obtain the necessary data of the communication profile. Hence, it is possible that the provisioning request shows dedicated data fields that explicitly request the communication profile or that simply the absence of the necessary data that is associated to the communication profile is an indication of a provisioning request for other units, like a data-path switcher, of the communication network.
- Terminating the provisioning request within a data-path switcher of the network provider, wherein the data-path switcher comprises means to distinguish the provisioning request of the user device from data transmission in a normal operational-mode of the user device;
   ∘ Practically the data-path switcher is arranged at the interface between the fixed access environment and the 5G core network so that the provisioning request can always be analyzed by the data-path switcher. Another option is that the IP address of the data-path switcher is known to the user device in order to directly communicate with the data-path switcher. From a practical point of view, it is desirable that the provisioning request terminates within the data-path switcher because a user device that has not been registered so far, shall not be allowed to communicate "freely" within the communication network. The data-path switcher is a device that provides the functionality to redirect data traffic within the communication network. The data-path switcher analyzes the data traffic of the user device to detect if the user device sends a provisioning request or just normal data traffic. Since the provisioning request does basically not contain any critical information it can be transmitted without encryption on a network layer that eases the data inspection process of the data-path switcher.
- Upon detecting the provisioning request, the data-path switcher directs the provisioning request over a provisioning data-path to a provisioning server wherein the provisioning server selects the communication profile that is associated to the identification provided by the provisioning request and transmits the communication profile to the user device via the fixed line data-path.

After the selection of the communication profile, the communication profile can also be downloaded by the user device. For that purpose, the communication profile can be pre-stored within a database of the provisioning server. The database can be designed as being a two column database, wherein in the first column the communication profile is listed and in the second column the identification. Within the context of the 5G environment, is possible to tailor the communication profile exactly to the needs of the user specified in the contract.

Since the 5G-RG shall provide access to the network, in particular to the Internet, for other devices, which themselves can connect to the 5G-RG, the 5G-RG is the user device that is used in the context of the invention and benefits from the inventive method.

The invention provides the advantage that the user device can authenticate itself towards a eSIM server directly for retrieving the respective eSIM profile.

The invention enables provisioning of a fixed line user device. The invention covers both cases, namely if the login mode of the user device uses a single fixed line access for both the provisioning process and then after the provisioning process for the normal operation mode and if it uses a wireless data-path that can be provided to the user device by another user equipment that serves as a Wi-Fi hotspot as will be described in detail in the following. The core idea in both cases is, that the provisioning request is being forwarded to the data-path switcher and then being redirected to the provisioning server. Further technical details of the provisioning process by using a further device as a Wi-Fi hotspot can be found in the document EP 3 277 000 A1.

In an embodiment, the communication profile comprises all information elements that are necessary to register in a 5G network.

This provides the advantage that successful transmission of the communication profile to the user device enables the user device to have full access to the 5G communication network. A further advantage is a nomadic usage: The user device can use any access line of the provider network.

In an embodiment, the user device stores the communication profile in a trusted hardware module, in particular in the eSIM chip.

This provides the advantage that the communication profile is securely stored so that it cannot be easily assessed by criminals. A further advantage is that it can be stored permanently within the device so that there is no need to perform the download process of the communication profile again if there is some kind of failure within the network of the provider. For example, if the communication profile would not be stored within the user device but somewhere else within the communication network blackout could lead to a situation in which the whole download process needs to be repeated for each 5G-RG in the network.

In an embodiment, user device switches from Login-Mode to normal operational-mode after successfully setting the communication profile in the trusted hardware module.

This provides the advantage that the user device knows when it is in the condition to regularly communicate with the 5G core network and to run certain processes or applications that need full access to the 5G core network. It would be inefficient if the user device starts to run these processes if it has not yet downloaded its communication profile because this would yield in an interruption of those processes, since the authentication process within the 5G core would not be successful and consequently the request would be refused.

In an embodiment, the data-path switcher directs data traffic of the user device to the 5G core network upon detecting normal operational-mode of the user device. In this case the data-path switcher directs data traffic into the normal operational data-path.

This provides the advantage that the data-path switcher is a module that can always be implemented at the interface between the fixed line network and the 5G core network. This provides the advantage that the user device does not need any additional information how to reach the data-path switcher because its data traffic always transverses the data-path switcher. On the other hand, the data-path switcher provides the capability to distinguish between login-mode and normal operational-mode and to direct the data traffic accordingly. If it detects normal operational-mode it basically does nothing but to relay the data traffic to the 5G core network according to BBF TR-456, BBF TR-470. The data-path switcher can detect normal operation-mode in different ways. It is possible that it simply detects that all the expected information according to the communication profile are provided within the data traffic. Alternatively, even though not claimed, it detects that the data traffic does not comprise any provisioning request. For example, it is possible to use Bit within the PPP Control Protocol, a so-called PADI.

In an embodiment, the provisioning server is located logically behind the data-path switcher.

In an embodiment, the provisioning data-path is a secure data path that is only accessible by the user device by means of the data-path switcher.

This provides the advantage that the user device is not capable to communicate with a provisioning server before the data-path switcher redirects the provisioning request to the provisioning server. This greatly increases security of the provisioning server from fraud and generates a secure network that is commonly called a walled garden. On the other hand, the network provider can access the provisioning server because its core network is also logically behind the data-path switcher so that the network provider can update the database of the provisioning server that contains the information about the communication profiles. Hence, no direct access to the provisioning server from the Internet for any other party but the network provider is possible.

In an embodiment, a bandwidth of the provisioning data-path per line-ID is limited to a value that prevents DDoS attacks.

Before having implemented the communication profile, the communication of the data traffic of the user device is characterized by an unsecure keyless communication without encryption because the respective keys can typically only be provided after the communication profile is associated to the user device. This is one of the reasons that makes it hard to detect if the provisioning request of the user device is actually really authorized to make the request. Criminals can therefore use provisioning requests for so-called DDoS attacks. However, limiting the bandwidth to a certain value provides the advantage that even a very large number of those attacks do not lead to an overloading of the provisioning server. The criminals can therefore make the provisioning request again and again without worsening the functionality of the communication network. Each network provider can therefore calculate, based on its infrastructure, the maximum bandwidth of the provisioning data-path that will not worsen the functionality office communication network. A typical bandwidth limiting value of the provisioning data-path is about 100KBit/s per line-ID.

In an embodiment, data-path switcher is a AGF module.

The AGF is typically already implemented at the interface between a wireline access and the 5G core network to enable the translation of a fixed line data traffic into 5G standards. It is easily possible to provide dedicated algorithms to the AGF so that it can redirect the provisioning request to the provisioning server. This provides the advantage that no additional devices or modules need to be implemented within the network.

In an embodiment, the identification which is the unique equipment identifier EID of the special eSIM chip, is a unique user device identifier.

This provides the advantage that neither the line-ID or the circuit-ID is used as the identification so that the provisioning process can actually be related to each individual user device. This makes it possible to perform the provisioning for multiple user devices. The line-ID typically only characterizes the subscriber port but not the user nor the user device. As a further advantage nomadic usage is possible. For a login any access line of the provider network can be used.

In an embodiment, the network provider links the 5G-RG user device identifier to the communication profile by providing it from the user to the network provider and/or by registering the 5G-RG user device identifier at the time of sale and assigning it to the communication profile.

Within the database of the provisioning server, there needs to be an association between the user device identifier and the communication profile of the user. If the user buys the user device independently from the network provider, then the network provider has no knowledge about the user device identifier. In this case, the user can message the user device identifier to the network provider by any means so that the network provider can make the corresponding association of the user device identifier and the communication profile within the database. Another option is that the network provider registers the device identifier at the time of sale and assigns it to the user's communication profile. All of these options provide the advantage that the user can use an information path that is "independent" from the fixed line access of the user device to provide this information to the network provider.

In an embodiment, the user device has further access to a wireless data-path by coupling to another device that serves as a wireless hotspot. On behalf of the user device the other device establishes a mobile data connection via a dedicated APN (in case of 2G/3G or 4G) or DNN or slice (in case of 5G) to the provisioning server. In particular, the user device can perform the coupling to the other device by means of the NFC-technique. This provides the advantage that the provisioning of the user device can take place independently from the fixed line access of the user device. In principle that enables and provisioning process that is independent from a distinct location. Therefore, the provisioning process can also be performed in shop when the user is actually buying the user device.

According to the second aspect of the invention, a 5G-RG user device is provided, according to independent claim 13.

The user device is configured to carry out at least some of the steps according to the method that are technically associated to the user device.

Such a user device provides at least some of the advantages described within the context of the method mentioned above.

According to a third aspect of the invention, a data-path switcher, is provided according to independent claim 14.

According to a fourth aspect of the invention, a communication system for provisioning a communication profile to a user device is provided, according to claim 15.

Such a communication system provides at least some of the advantages described within the context of the method mentioned above. In particular, the advantage is that are technically related to the communication system.

In the following, preferred implementation examples of the present invention are explained with reference to the accompanying figure:
- Fig. 1:: shows a generic 5G core network.
- Fig. 2:: shows a communication system according to the invention to enable provisioning of a fixed line user device.

In the following, numerous features of the present invention are explained in detail by means of preferred embodiments. The present disclosure is not limited to the specifically named combinations of features. The invention is defined in the independent claims as appended.

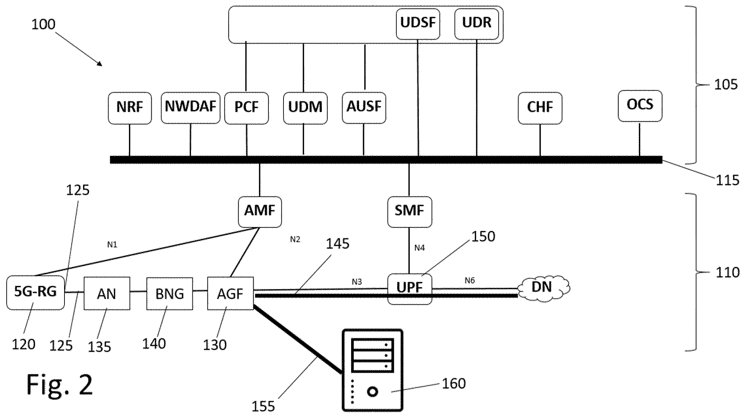

Fig. 2 shows the communication system 100, in particular a 5G communication system, according to the invention to enable provisioning of a fixed line user device.

The communication system 100 comprises of a first part 105 that basically represented a 5G core network and a second part 110 that represents the part of the 5G network that deals with a provisioning process according to the invention. The first part 105 and the second part 110 are connected by an interface 115 in order to exchange data traffic.

In the context of the invention, we will focus mainly on the second part 110 that shows the following:
A user device 120, in particular a 5G-RG 120, of a user that is not yet provisioned with a communication profile according to a contract between the user and network provider of the 5G communication network. The 5G-RG comprises a fixed line access 125 and can establish a fixed line data path to a data-path switcher 130, in particular an AGF 130, over an access node 135 and potentially a BNG 140. With respect to the invention, the BNG 140 is an optional device.The AGF 130 is located at the interface between the fixed line access and the 5G network in order to translate fixed line communication to 5G standards.

The AGF 130 has switching function and can direct data traffic of the 5G-RG 120 into a first data path 145, wherein the first data path 145 is a normal operational data-path 145. The normal operational data-path 145 has access to the user plane function 150 of the 5G network and enables the user device 120 to run user replications and/or user processes. However, if the 5G-RG 120 has not yet being provisioned, the AGF 130 comprises means to detect that the data traffic of the 5G-RG 120 originates from an not yet provisioned device and directs the data traffic over a second data path 155 to a provisioning server 160. The second data path 155 can also be called a login data-path 155 or a provisioning data-path 155.

The provisioning server 160 provides the communication profile within a database. So, if the 5G-RG 120 is not yet provisioned, the data traffic communication terminates in the AGF 130, or in the provisioning server 160 respectively.

This can be facilitated as follows:
For each access line 165, which can be identified by a unique line-ID, the AGF 130 can distinguish between two modes of operation of the 5G-RG 120. If the 5G-RG 120 is un-provisioned, it runs in a login-mode, whereas a provisioned 5G-RG 120 runs in normal operational-mode. The selection of the appropriate mode can be done by the 5G-RG 120 itself. In login-mode, the 5G- RG 120 can receive and initial IP address by the AGF 130 out of local IP pool, e.g. via the DHCP procedure dependent on a HW MAC address or a Line ID. In the login mode, the AGF 130 will forward any data traffic regardless of the given destination IP address to this provisioning server 160. No other destination can be reached in the initial login mode. The login procedure (eSIM direct), which is performed on the provisioning server 160 uses a unique equipment identifier (EID) of a special eSIM chip within the 5G-RG 120 in order to reference the corresponding eSIM profile. The login procedure results in the secure download of a unique eSIM profile onto the 5G-RG 120 followed by the existing mechanisms for eSIM provisioning. This eSIM profiles contains all information elements which are necessary to register into a 5G network and additional data, such as SUPI, cryptographic keys, PIN, PUK or preferred roaming networks.

Using a user device specific identification provides the advantage that the invention does not depend on the Line-ID as an identification. The line-ID the actual port of the subscriber but is in principle not related to the user device itself or to the customer. This may cause problems if multiple fixed line user devices shall communicate over the same port. In these cases, using only the line-ID, it is not possible to distinguish between those devices or between different users. Hence, the feature of using an identification that is related to the user device, e.g. an EID of the eSIM, enables a specific registration process for multiple user devices or users.

After setting the eSIM credentials within the 5G-RG, a standard attachment procedure of 5G-RG towards the 5G network can be established and the primary IP path - normal operation mode- can be used.

The login mode can be either based on:
- PPPoE authentication and connection to the walled garden;
- pure IPv4/6 + DHCP based configuration;
it is also possible to use other protocols. All of these protocols do not require SIM-based authentication. However, it is possible to implement username+ password authentication or any other authentication, which is not sim-based.

As the connection of the provisioning data-path is only used for transferring little data, the operator can strongly limit the bandwidth per subscriber line to the walled garden in order to avoid DDoS attacks, e.g. to 100 KBit/s per line-ID. This can be done analog to traffic shaping of Voice over IP traffic for security reasons.

The eSIM provisioning on the 5G-RG 120 will be done only once. This means: Only in case a customer is new (or the operator is changed) the new profile is loaded. The communication profile is saved persistent in the trusted hardware of the 5G-RG. This has two advantages:
The availability is less critical. In case the Walled garden or the eSIM provisioning server 160 is not available, only new customers that login for the first time are affected.

After a blackout ("Stromausfall") typically all 5G-RG 120 (which have no USV) are turning on synchronously and login to the access network (currently BNG, in future 5G-core). If the communication profile is saved persistent in the eSIM of the 5G-RG 120, the does not request a eSIM profile as it is already stored persistently. As an advantage, the eSIM provisioning server 160 must not be designed for handling bursts of requests.

For eSIM direct, an active eSIM profile must be linked to the EID of the eSIM chip. The EID can either be scanned from the EC packaging or entered manually in the booking system (BSP). After this entry, this eSIM profile is made available for this EID on provisioning server 160. After switching on the device, the eSIM profile download according to the invention is started and the eSIM is ready for use.

## Claims

1. Method for provisioning a communication profile of a 5G-RG, residential gateway, user device, that is connected to a network of a network provider via a fixed line, the method comprising the following steps:
• Starting a Login-Mode by the 5G-RG user device (120), wherein the 5G-RG user device (120) signals a provisioning request in the Login-Mode over a fixed line data-path (125) provided by the network provider, wherein the provisioning request comprises an identification related to the communication profile of the 5G-RG user device associated to the network provider;
• Terminating the provisioning request within a data-path switcher (130) of the network provider, wherein the data-path switcher (130) comprises means to distinguish the provisioning request of the 5G-RG user device from data transmission in a normal operational-mode of the 5G-RG user device (120);
• Upon detecting the provisioning request, the data-path switcher (130) directs the provisioning request over a provisioning data-path (155) to a provisioning server (160), wherein the provisioning server (160) selects the communication profile that is associated to the identification provided in the provisioning request and transmits the communication profile to the 5G-RG user device (120) via the fixed line data-path (125), wherein the provisioning server 160 uses the identification which is a unique equipment identifier, EID, of a special eSIM chip within the 5G-RG user device (120) in order to reference the corresponding eSIM profile.

2. The method of claim 1, wherein the communication profile comprises all information elements that are necessary to register in a 5G network.

3. The method of any of the claims, wherein the user device stores the communication profile in a trusted hardware module, in particular in the eSIM chip, wherein the trusted hardware module is integrated within the user device.

4. The method of claim 3, wherein the user device switches from Login-Mode to normal operational-mode after successfully setting the communication profile in the trusted hardware module.

5. The method of claim 4, wherein the data-path switcher directs data traffic of the user device to the 5G core network upon detecting normal operational-mode of the user device.

6. The method of any of the claims, wherein the provisioning server is located logically behind the data-path switcher.

7. The method of any of the claims, wherein the provisioning data-path is a secure data path that is only accessible by means of the data-path switcher.

8. The method of any of the claims, wherein a bandwidth of the provisioning data-path is limited to a value that prevents DDoS attacks.

9. The method of any of the claims, wherein the data-path switcher is a AGF module.

10. The method of any of the claims, wherein the identification which is the EID is a unique 5G-RG user device identifier.

11. The method of claim 10, wherein the network provider links the 5G-RG user device identifier to the communication profile by providing it from the user to the network provider and/or by registering the 5G-RG user device identifier at the time of sale and assigning it to the communication profile,

12. The method of any of the claims, wherein the 5G-RG user device has further access to a wireless data-path by coupling to another device that serves as a login-mode gateway function.

13. A 5G-RG, residential gateway, user device, wherein the 5G-RG user device is designed to connect to a network of a network provider via a fixed line, in particular the 5G-RG user device is designed for requesting and obtaining a communication profile that enables the 5G-RG user device to communicate via a 5G network, the 5G-RG user device comprising
• at least a fixed line communication interface;
• a trusted hardware module that is configured to store a communication profile of the 5G-RG user device associated to the network provider;
• a processor that is configured to determine if the communication profile is stored in the trusted hardware module, wherein the processor is configured to activate a Login-Mode and to send a provisioning request upon detecting that the communication profile is not being stored in the trusted hardware module to a data-path switcher, wherein the provisioning request comprises an identification related to the communication profile of the 5G-RG user device wherein said identification is the unique equipment identifier, EID, of a special eSIM chip within the 5G-RG user device (120) in order to reference the corresponding eSIM profile.

14. A data-path switcher of a network provider comprising
• at least a first communication interface for communicating with the 5G-RG, residential gateway, user device of claim 13, a second communication interface for communicating with a provisioning server, and a third interface to a user plane function, UPF, of a 5G network,
• a processor that is configured to analyze data transmission received from the 5G-RG user device over the first communication interface and having the following two functionalities:
∘ upon detecting a provisioning request of the 5G-RG user device to direct the provisioning request via its second communication interface to the provisioning server and
∘ to direct the data transmission of the 5G-RG user device to the 5G core network upon detecting normal operational-mode of the 5G-RG user device, wherein the processor detects normal operational mode by detecting if all expected information according to a 5G-RG user device communication profile are provided.

15. A communication system for provisioning a communication profile of a 5G-RG , residential gateway, user device, the communication system comprising:
• the 5G-RG user device of claim 13;
• the data-path switcher of claim 14;
• a provisioning center that is logically placed behind the data-path switcher and is configured to store the communication profile of at least the 5G-RG user device associated to an identification which is a unique equipment identifier, EID, of a special eSIM chip within the 5G-RG user device in order to reference a corresponding eSIM profile; wherein the communication system is configured to perform the steps of the method of any of the claims 1-12.

## Patentansprüche

1. Verfahren zum Provisionieren eines Kommunikationsprofils eines 5G-RG-, Residential-Gateway-, Benutzergeräts, das über eine feste Leitung mit einem Netzwerk eines Netzwerkanbieters verbunden ist, wobei das Verfahren die folgenden Schritte umfasst:
• Starten eines Anmelde-Modus durch das 5G-RG-Benutzergerät (120), wobei das 5G-RG-Benutzergerät (120) in dem Anmelde-Modus eine Provisionierungs-Anfrage über einen von dem Netzwerkanbieter bereitgestellten Festleitungs-Datenpfad (125) signalisiert, wobei die Provisionierungs-Anfrage eine Kennung umfasst, die sich auf das Kommunikationsprofil des 5G-RG-Benutzergeräts bezieht, das mit dem Netzwerkanbieter assoziiert ist;
• Terminieren der Provisionierungs-Anfrage innerhalb eines Datenpfad-Umschalters (130) des Netzwerkanbieters, wobei der Datenpfad-Umschalter (130) Mittel umfasst, die dazu eingerichtet sind, die Provisionierungs-Anfrage des 5G-RG-Benutzergeräts von Datenübertragungen in einem normalen Betriebsmodus des 5G-RG-Benutzergeräts (120) zu unterscheiden;
• wobei, wenn die Provisionierungs-Anfrage detektiert wird, der Datenpfad-Umschalter (130) die Provisionierungs-Anfrage über einen Provisionierungs-Datenpfad (155) an einen Provisionierungs-Server (160) leitet, wobei der Provisionierungs-Server (160) das Kommunikationsprofil, das mit der in der Provisionierungs-Anfrage bereitgestellten Kennung assoziiert ist, auswählt und das Kommunikationsprofil über den Festleitungs-Datenpfad (125) an das 5G-RG-Benutzergerät (120) überträgt,
wobei der Provisionierungs-Server (160) die Kennung benutzt, bei der es sich um einen eindeutigen Equipment Identifier, EID, eines speziellen eSIM-Chips innerhalb des 5G-RG-Benutzergeräts (120) handelt, um das entsprechende eSIM-Profil zu referenzieren.

2. Verfahren nach Anspruch 1, wobei das Kommunikationsprofil alle zum Registrieren in einem 5G-Netzwerk erforderlichen Informationselemente umfasst.

3. Verfahren nach einem der Ansprüche, wobei das Benutzergerät das Kommunikationsprofil in einem vertrauenswürdigen Hardwaremodul, insbesondere in dem eSIM-Chip, speichert,
wobei das vertrauenswürdige Hardwaremodul innerhalb des Benutzergeräts integriert ist.

4. Verfahren nach Anspruch 3, wobei das Benutzergerät nach erfolgreichem Einstellen des Kommunikationsprofils in dem vertrauenswürdigen Hardwaremodul von dem Anmeldemodus in einen normalen Betriebsmodus umschaltet.

5. Verfahren nach Anspruch 4, wobei der Datenpfad-Umschalter auf ein Erkennen des normalen Betriebsmodus des Benutzergeräts hin Datenverkehr des Benutzergeräts an das 5G-Core-Netzwerk leitet.

6. Verfahren nach einem der Ansprüche, wobei der Provisionierungs-Server logisch hinter dem Datenpfad-Umschalter angeordnet ist.

7. Verfahren nach einem der Ansprüche, wobei der Provisionierungs-Datenpfad ein sicherer Datenpfad ist, der nur mittels des Datenpfad-Umschalters zugänglich ist.

8. Verfahren nach einem der Ansprüche, wobei eine Bandbreite des Provisionierungs-Datenpfads auf einen Wert limitiert ist, der DDoS-Angriffe verhindert.

9. Verfahren nach einem der Ansprüche, wobei der Datenpfad-Umschalter ein AGF-Modul ist.

10. Verfahren nach einem der Ansprüche, wobei die Kennung, bei welcher es sich um die EID handelt, eine eindeutige Kennung des 5G-RG-Benutzergeräts ist.

11. Verfahren nach Anspruch 10, wobei der Netzwerkanbieter die Kennung des 5G-RG-Benutzergeräts mit dem Kommunikationsprofil verknüpft, indem diese von dem Benutzer dem Netzwerkanbieter bereitgestellt wird, und/oder in dem die Kennung des 5G-RG-Benutzergeräts zum Verkaufszeitpunkt registriert und dem Kommunikationsprofil zugewiesen wird.

12. Verfahren nach einem der Ansprüche, wobei das 5G-RG-Benutzergerät durch Koppeln an eine weitere Vorrichtung, die als Anmeldemodus-Gateway-Funktion dient, ferner Zugriff auf einen drahtlosen Datenpfad hat.

13. 5G-RG-, Residential-Gateway-, Benutzergerät, wobei das 5G-RG-Benutzergerät dazu ausgelegt ist, sich über eine feste Leitung mit einem Netzwerk eines Netzwerkanbieters zu verbinden, wobei insbesondere das 5G-RG-Benutzergerät dazu ausgelegt ist, ein Kommunikationsprofil, welches es dem 5G-RG-Benutzergerät ermöglicht, über ein 5G-Netzwerk zu kommunizieren, anzufragen und zu erlangen, wobei das 5G-RG-Benutzergerät umfasst:
• mindestens eine Festleitungs-Kommunikationsschnittstelle;
• ein vertrauenswürdiges Hardwaremodul, welches dazu eingerichtet ist, ein Kommunikationsprofil des 5G-RG-Benutzergeräts zu speichern, das mit dem Netzwerkanbieter assoziiert ist;
• einen Prozessor, der dazu eingerichtet ist, zu bestimmen, ob das Kommunikationsprofil in dem vertrauenswürdigen Hardwaremodul gespeichert ist, wobei der Prozessor dazu eingerichtet ist, auf ein Detektieren hin, dass das Kommunikationsprofil nicht in dem vertrauenswürdigen Hardwaremodul gespeichert ist, einen Anmeldemodus zu aktivieren und eine Provisionierungs-Anfrage an einen Datenpfad-Umschalter zu senden, wobei die Provisionierungs-Anfrage eine Kennung umfasst, die sich auf das Kommunikationsprofil des 5G-RG-Benutzergeräts bezieht, wobei es sich bei der Kennung um den eindeutigen Equipment Identifier, EID, eines speziellen eSIM-Chips innerhalb des 5G-RG-Benutzergeräts (120) handelt, um das entsprechende eSIM-Profil zu referenzieren.

14. Datenpfad-Umschalter eines Netzwerkanbieters, umfassend:
• mindestens eine erste Kommunikationsschnittstelle zum Kommunizieren mit dem 5G-RG-, Residential-Gateway-, Benutzergerät nach Anspruch 13, eine zweite Kommunikationsschnittstelle zum Kommunizieren mit einem Provisionierungs-Server, und eine dritte Schnittstelle mit einer Benutzerebenenfunktion, UPF, eines 5G-Netzwerks;
• einen Prozessor, der dazu eingerichtet ist, Datenübertragungen zu analysieren, die von dem 5G-RG-Benutzergerät über die erste Kommunikationsschnittstelle empfangen werden, und aufweisend die folgenden beiden Funktionalitäten:
∘ auf ein Detektieren einer Provisionierungs-Anfrage des 5G-RG-Benutzergeräts hin, Leiten der Provisionierungs-Anfrage über seine zweite Kommunikationsschnittstelle an den Provisionierungs-Server, und
o auf ein Detektieren eines normalen Betriebsmodus des 5G-RG-Benutzergeräts hin, Leiten der Datenübertragung des 5G-RG-Benutzergeräts an das 5G-Core-Netzwerk,
wobei der Prozessor den normalen Betriebsmodus detektiert durch Detektieren, ob alle erwarteten Informationen gemäß einem Kommunikationsprofil des 5G-RG-Benutzergeräts bereitgestellt werden.

15. Kommunikationssystem zum Provisionieren eines Kommunikationsprofils eines 5G-RG-, Residential-Gateway-, Benutzergeräts, wobei das Kommunikationssystem umfasst:
• das 5G-RG-Benutzergerät nach Anspruch 13;
• den Datenpfad-Umschalter nach Anspruch 14;
• ein Provisionierungs-Zentrum, das logisch hinter dem Datenpfad-Umschalter platziert ist und dazu eingerichtet ist, das Kommunikationsprofil mindestens des 5G-RG-Benutzergeräts zu speichern, das mit einer Kennung assoziiert ist, bei der es sich um einen eindeutigen Equipment Identifier, EID, eines speziellen eSIM-Chips innerhalb des 5G-RG-Bentuzergeräts handelt, um ein entsprechendes eSIM-Profil zu referenzieren;
wobei das Kommunikationssystem dazu eingerichtet ist, die Schritte des Verfahrens nach einem der Ansprüche 1 bis 12 durchzuführen.

## Revendications

1. Procédé de provisionnement d'un profil de communication pour un dispositif d'utilisateur de passerelle résidentielle 5G-RG qui est connecté à un réseau d'un opérateur via une ligne fixe, le procédé comprenant les étapes suivantes :
• démarrage d'un mode de connexion par le dispositif d'utilisateur 5G-RG (120), dans lequel le dispositif d'utilisateur 5G-RG (120) signale une demande de provisionnement en mode de connexion via un chemin de données de ligne fixe (125) fourni par l'opérateur, dans lequel la demande de provisionnement comprend une identification relative au profil de communication du dispositif d'utilisateur 5G-RG associé à l'opérateur ;
• la terminaison de la demande de provisionnement dans un commutateur de chemin de données (130) de l'opérateur, dans lequel le commutateur de chemin de données (130) comprend des moyens pour distinguer la demande de provisionnement du dispositif d'utilisateur 5G-RG de la transmission de données en mode de fonctionnement normal du dispositif d'utilisateur 5G-RG (120) ;
• lors de la détection de la demande de provisionnement, le commutateur de chemin de données (130) dirige la demande de provisionnement via un chemin de données de provisionnement (155) vers un serveur de provisionnement (160), dans lequel le serveur de provisionnement (160) sélectionne le profil de communication associé à l'identification fournie dans la demande de provisionnement et transmet le profil de communication au dispositif d'utilisateur 5G-RG (120) via le chemin de données de ligne fixe (125),
dans lequel le serveur de provisionnement (160) utilise l'identification, qui est un identifiant d'équipement unique, EID, d'une puce eSIM spéciale intégrée au dispositif d'utilisateur 5G-RG (120) afin de référencer le profil eSIM correspondant.

2. Procédé selon la revendication 1, dans lequel le profil de communication comprend tous les éléments d'informations qui sont nécessaires à enregistrer dans un réseau 5G.

3. Procédé selon une quelconque des revendications, dans lequel le dispositif d'utilisateur stocke le profil de communication dans un module matériel de confiance, notamment dans la puce eSIM, dans lequel le module matériel de confiance est intégré au dispositif d'utilisateur.

4. Procédé selon la revendication 3, dans lequel le dispositif d'utilisateur passe du mode de connexion au mode de fonctionnement normal après avoir correctement configuré le profil de communication dans le module matériel de confiance.

5. Procédé selon la revendication 4, dans lequel le commutateur de chemin de données dirige le trafic de données du dispositif d'utilisateur vers le réseau central 5G dès la détection du mode de fonctionnement normal du dispositif d'utilisateur.

6. Procédé selon une quelconque des revendications, dans lequel le serveur de provisionnement est situé logiquement derrière le commutateur de chemin de données.

7. Procédé selon une quelconque des revendications, dans lequel le chemin de données de provisionnement est un chemin de données sécurisé accessible uniquement par le commutateur de chemin de données.

8. Procédé selon une quelconque des revendications, dans lequel une bande passante du chemin de données de provisionnement est limitée à une valeur qui empêche les attaques DDoS.

9. Procédé selon une quelconque des revendications, dans lequel le commutateur de chemin de données est un module AGF.

10. Procédé selon une quelconque des revendications, dans lequel l'identification, qui est l'EID, est un identifiant unique de dispositif d'utilisateur 5G-RG.

11. Procédé selon la revendication 10, dans lequel le opérateur lie l'identifiant de dispositif d'utilisateur 5G-RG au profil de communication en le fournissant par l'utilisateur à l'opérateur et/ou en enregistrant l'identifiant de dispositif d'utilisateur 5G-RG au moment de la vente et en l'attribuant au profil de communication.

12. Procédé selon une quelconque des revendications, dans lequel le dispositif d'utilisateur 5G-RG dispose d'un accès supplémentaire à un chemin de données sans fil en se connectant à un autre dispositif qui sert de fonction de passerelle de connexion.

13. Dispositif d'utilisateur de passerelle résidentielle 5G-RG, dans lequel le dispositif d'utilisateur 5G-RG est conçu pour se connecter à un réseau d'un opérateur via une ligne fixe, notamment le dispositif d'utilisateur 5G-RG est conçu pour demander et obtenir un profil de communication qui permet au dispositif d'utilisateur 5G-RG de communiquer via un réseau 5G, le dispositif d'utilisateur 5G-RG comprenant :
• au moins une interface de communication fixe ;
• un module matériel de confiance qui est configuré pour stocker un profil de communication du dispositif d'utilisateur 5G-RG associé à l'opérateur ;
• un processeur qui est configuré pour déterminer si le profil de communication est stocké dans le module matériel de confiance, dans lequel le processeur est configuré pour activer un mode de connexion et envoyer une demande de provisionnement à un commutateur de chemin de données dès qu'il détecte que le profil de communication n'est pas stocké dans le module matériel de confiance, dans lequel la demande de provisionnement comprend une identification relative au profil de communication du dispositif d'utilisateur 5G-RG, dans lequel ladite identification est l'identifiant unique d'équipement, EID, d'une puce eSIM spéciale intégrée au dispositif d'utilisateur 5G-RG (120) afin de référencer le profil eSIM correspondant.

14. Commutateur de chemin de données d'un opérateur comprenant :
• au moins une première interface de communication pour communiquer avec le dispositif d'utilisateur de passerelle résidentielle 5G-RG, selon la revendication 13, une deuxième interface de communication pour communiquer avec un serveur de provisionnement et une troisième interface vers une fonction de plan d'utilisateur, UPF, d'un réseau 5G ;
• un processeur qui est configuré pour analyser la transmission de données reçue du dispositif d'utilisateur 5G-RG via la première interface de communication et doté des deux fonctionnalités suivantes :
∘ lors de la détection d'une demande de provisionnement du dispositif d'utilisateur 5G-RG, la direction de la demande de provisionnement via sa deuxième interface de communication vers le serveur de provisionnement et
∘ la direction de la transmission de données du dispositif d'utilisateur 5G-RG vers le réseau central 5G lors de la détection du mode de fonctionnement normal du dispositif d'utilisateur 5G-RG,
dans lequel le processeur détecte le mode de fonctionnement normal en vérifiant si toutes les informations attendues selon le profil de communication du dispositif d'utilisateur 5G-RG sont fournies.

15. Système de communication permettant de provisionner un profil de communication d'un dispositif d'utilisateur de passerelle résidentielle 5G-RG ou d'un dispositif d'utilisateur, le système de communication comprenant :
• le dispositif d'utilisateur 5G-RG selon la revendication 13 ; et
• le commutateur de chemin de données selon la revendication 14 ;
• un centre de provisionnement, qui est placé logiquement derrière le commutateur de chemin de données et est configuré pour stocker le profil de communication d'au moins le dispositif d'utilisateur 5G-RG associé à une identification, qui est un identifiant d'équipement unique (EID) d'une puce eSIM spéciale intégrée au dispositif d'utilisateur 5G-RG, afin de référencer un profil eSIM correspondant,
dans lequel le système de communication est configuré pour exécuter les étapes du procédé selon une quelconque des revendications 1 à 12.
